# EUROPEAN PATENT SPECIFICATION

(11) **EP 0 852 646 B1**
(45) Date of publication and mention of the grant of the patent: **05.01.2000**
(21) Application number: 96931910.2
(22) Date of filing: 30.09.1996
(51) Int. Cl.: E04H 17/16, E01F 13/02, E01F 13/04, A01K 3/00

(54) **A RETRACTABLE BARRIER**
EINZIEHBARE BARRIERE
BARRIERE RETRACTABLE

(30) Priority: 29.09.1995 GB 9519810
(43) Date of publication of application: 15.07.1998
(73) Proprietor: Hardy, Edwin, Crewe, Cheshire CW3 0AH (GB)
(72) Inventor: Hardy, Edwin, Crewe, Cheshire CW3 0AH (GB)
(74) Representative: Downey, William Gerrard
(86) International application number: GB9602383
(87) International publication number: WO9713049

(56) References cited:
- WO-A-88/04715
- WO-A-95/01720
- DE-A- 2 329 930
- FR-A- 2 450 557
- FR-A- 2 686 914
- GB-A- 2 188 662

## Description

The present invention relates to a retractable barrier. The barrier is intended for agricultural use.

Barriers comprising flexible material are well known. They may be used, for example, to enclose road works to avoid danger to pedestrians especially in locations in built up areas. As the size of the works may vary, it will usually be necessary to tailor the barrier to the particular works. This in turn may mean that a barrier tailored for use in one location may not be used in another leading to waste in material.

U.S. Patent No. 4,844,420 describes a crowd control barrier comprising a ribbon like element. This barrier which is suitable for the purpose for which it was designed would not be adequate for agricultural use.

French Patent Application No. 2450557 describes a flexible fence arrangement for agricultural use comprising cables which may be withdrawn from an exposed pulley arrangement.

U.S. Patent No. 4,119,301 describes a flexible arrangement. This would be difficult for one man to use easily.

According to the present invention there is provided a barrier for agricultural use comprising a flexible element, means for storing the flexible element from which the element may be withdrawn and into which the element may be retracted, the element extending over the major part of the length of the means for storing and means associated with the means for storing for automatically retracting the flexible element into the means for storing on release from a withdrawn position, wherein the means for storing comprises an elongate tube within which the flexible element may be stored, the tube further comprising a gap extending over the major part of the length of the tube through which the flexible element may be withdrawn or retracted and the means for storing is adapted to be removably pivotally mounted via a hinged joint (26, 27) to a post to enable the flexible element to be pivoted through an angle.

In a preferred embodiment of the invention, the means for storing comprises an elongate tube comprising a gap extending over the major part of the length of the tube through which the flexible element may be withdrawn or retracted. Means are provided for pretensioning the means for automatically retracting which advantageously comprises a helical spring the torsional force in which is increased as the flexible element is withdrawn, the torsional force being employed on release of the element to retract it back onto the means for storing. The means for storing comprises a former coaxially surrounding the means for automatically retracting upon which the flexible element is wound for storage. The flexible element may comprise a series of aligned members or a net. The element comprise or consist of flexible material and/or electrically conductive material. In the latter case means may be provided for electrifying the fence.

In order that the invention may be clearly understood, one embodiment thereof will now be described, by way of example with reference to the accompanying drawing, in which:-
Figure 1 shows a front elevational view of one form of barrier according to the invention,
Figure 2 shows a sectional view of part of the barrier of figure 1,
Figure 3 shows a front elevational view of part of the barrier of figure 1 and

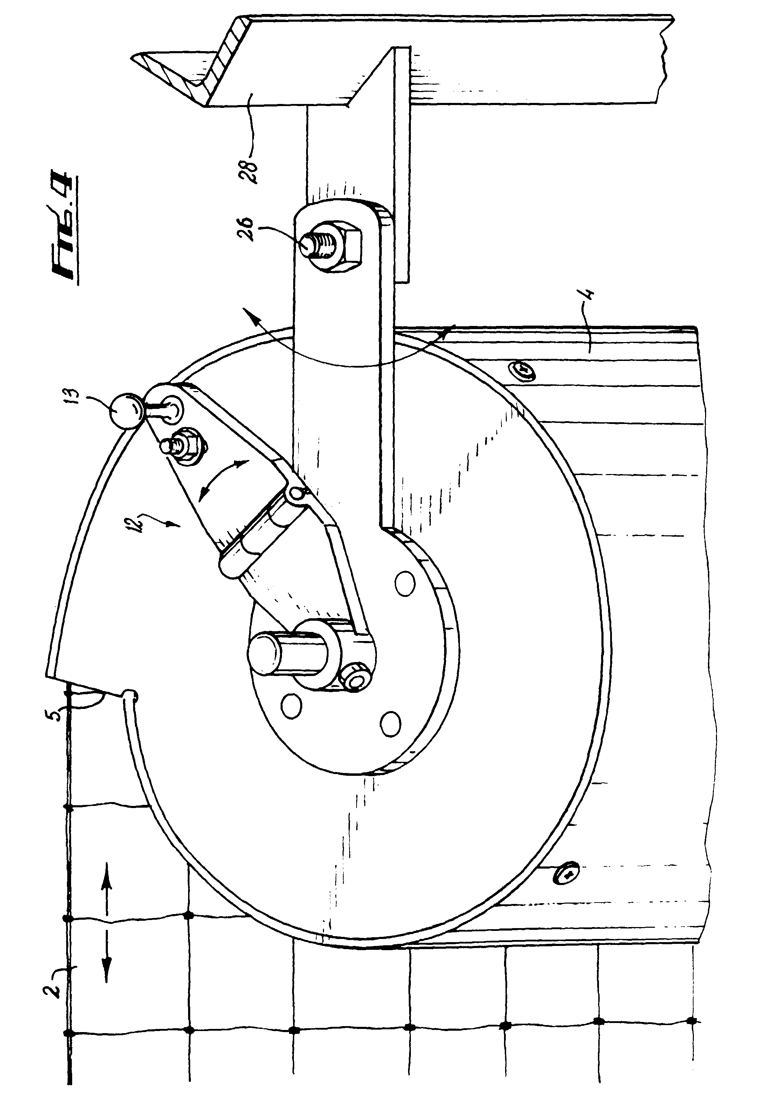

Figure 4 shows a detail view to a larger scale of part of the barrier of figure 1.

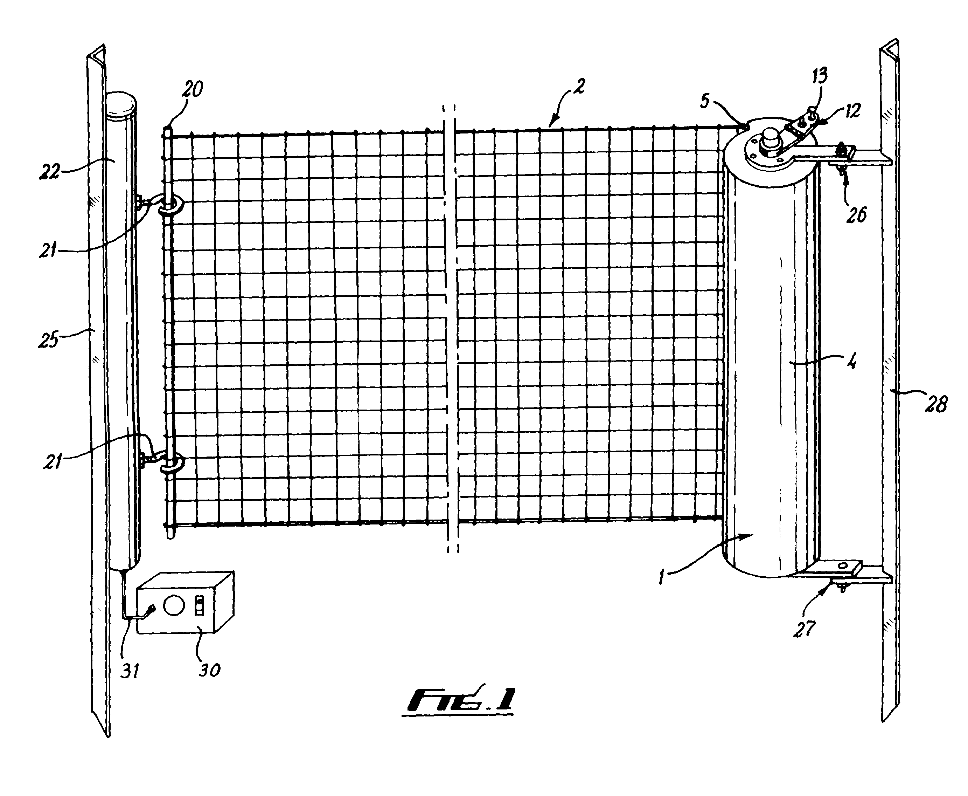

Referring to figure 1, the barrier generally comprises a storage unit in the form of a tube 1, a flexible element 2 in the form of netting adapted to be drawn out of and retracted into the tube 1, and a retraction mechanism 3 for retracting the element 2 into the tube 1. The netting advantageously comprises steel or other suitable metal interwoven with nylon. Other forms of netting made of other materials or a plurality of spaced aligned elongate flexible members of string, tape or other suitable material may equally well be used.

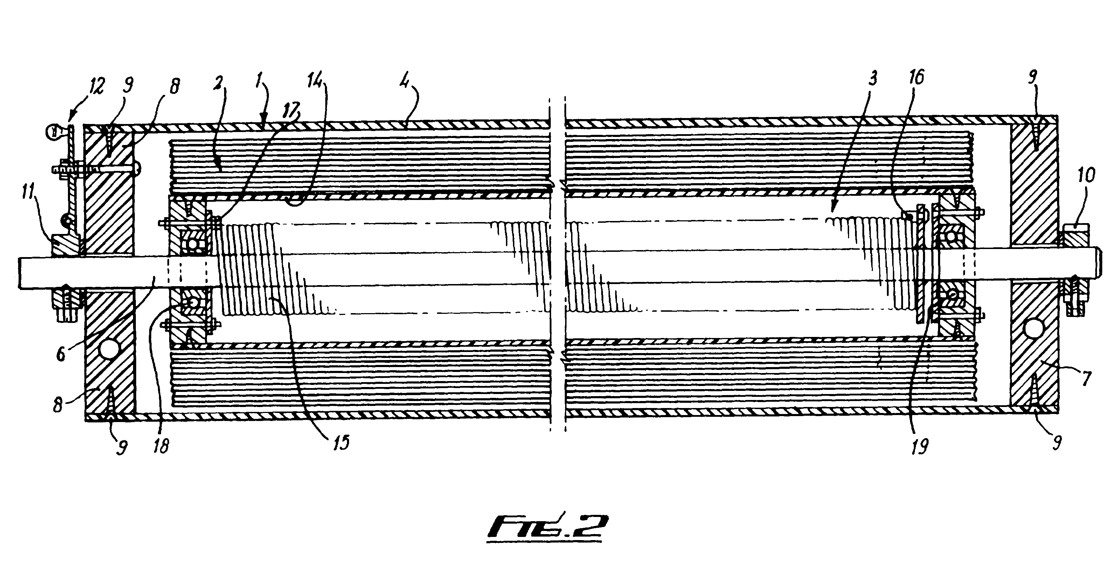

Referring additionally to figure 2, the tube 1 comprises a substantially cylindrical body 4 which defines a gap 5 extending substantially parallel to the axis of the cylinder in the surface of the cylinder through which the element 2 may be drawn out of the tube or retracted into the tube. The retraction mechanism 3 is housed in the tube 1. This mechanism 3 comprises a steel shaft 6 which extends axially of the cylinder through end caps 7 and 8 disposed at opposite ends respectively of the tube 1. The end caps 7 and 8 are secured to the tube 1 by screws 9. Both the end caps 7 and 8 and the tube 1 are made of synthetic plastics material. The shaft 6 is retained in position axially by means of shaft retaining bushes 10 and 11 disposed on the shaft at opposite ends respectively externally of the corresponding ends 7 and 8. End bush 11 forms part of a spring pretensioning mechanism 12 which also comprises a handle 13 which may be used to rotate the shaft. Coaxially mounted on the shaft 6 within the tube 1 is a further synthetic plastics material tube 14 which serves as a former on which the flexible element 1 may be wound. Within this tube 14 coaxially arranged around the shaft 6 is a helical spring 15. This is anchored to the steel shaft by means of a pin 16 at one end and, by means of a further pin 17, to the tube 14 at the other end. The tube 14 is mounted on the shaft 6 by ball bearings 18 and 19 disposed at opposite ends respectively of the shaft 6. Each ball bearing comprises a plurality of balls set in a ball race.

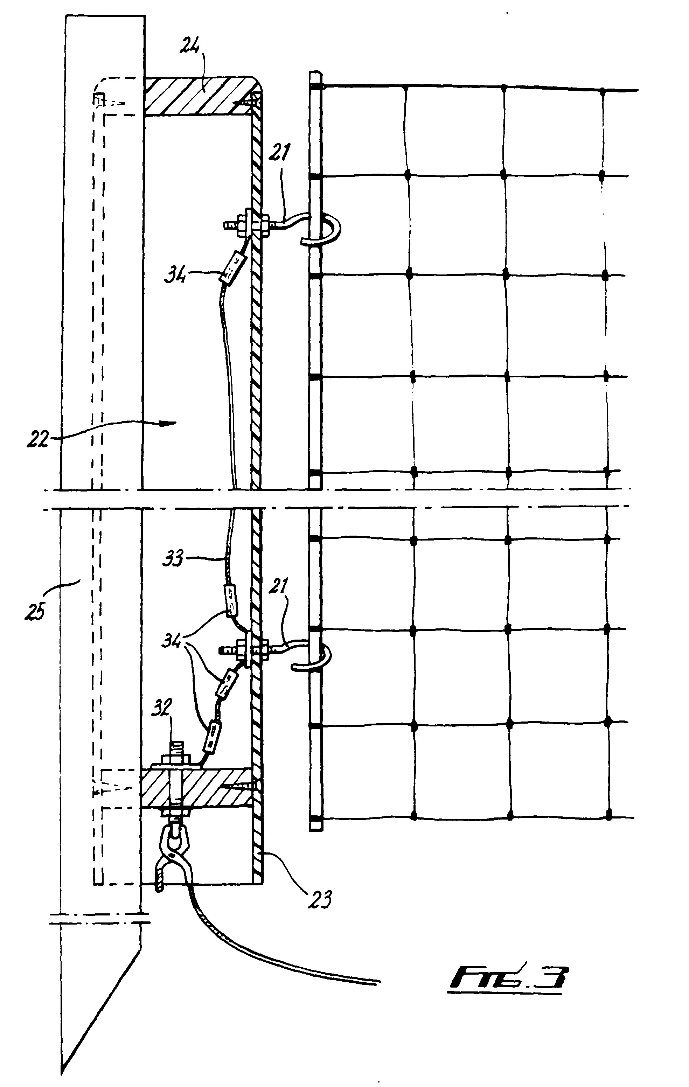

In operation, the flexible element 2 is withdrawn from the stored position through the gap 5 in the cylindrical body 4. In the stored position, the element 2 is wound around the former provided by the tube 14. As the element is withdrawn, the helical spring is twisted further increasing the torsional force within the spring and thereby the force tending to withdraw the element 2 back into the body 4. The element 2 terminates at its free end in a metal member 20. This may be hooked in position after the element has been withdrawn a sufficient distance to retain the element in the withdrawn position. In the example shown in figures 1 and 3, static galvanized steel hooks 21 are connected to a hollow post 22 comprising a body 23 and cap 24 both made of synthetic plastics material and connected in turn to an angle iron post 25 which may be driven into the ground. The body 4 is connected via hinged joints 26 and 27 to a further angle iron post 28 which may also be driven into the ground. The hinged joints 26, 27 permit the body 4 to be pivoted through 180° so that the flexible element 2 may also be pivoted through the same angle without having to move the post 28. The spacing of the posts 25 and 28 may be altered as desired to alter the extent of the extended fence provided by the flexible element 2. In this application the barrier may be used as a gate for example to a field or other agricultural enclosure. Several such barriers may be used together to provide enclosures. For example four may be used each substantially at right angles to the next adjacent barrier to provide an enclosure which is square or oblong in plan view. Three may be used similarly to form an enclosure which is triangular in plan view.

Particularly where the barrier is for agricultural use, the barrier may be electrified. For this purpose (referring to figures 1 and 3) a source of voltage 30 is connected via a cable 31 to an electrode connecting pin 32 disposed with the hollow post 22. This pin is connected electrically to the galvanized steel hooks 21 via an insulated copper wire 33 and connecting lugs 34. The hooks 21 electrically contact the metal member 20 which in tum is electrically connected to the steel woven into the flexible element 2. If desired reflective strips may be attached to or form part of the flexible element 2.

It will be appreciated that the above embodiment has been described by way of example only and that many variations are possible without departing from the scope of the invention. For example, a barrier may be used as a net on a tennis court. The body 4 may be dispensed with if desired. Where the flexible element comprises aligned strings, each individual string may run in its own aperture in the body 4. One or more discs, made, for example of wood may coaxially surround the shaft 6 to provide support for the spring 15. Alternatively, that support may be provided by a cylinder also coaxially surrounding the shaft. Instead of having bearings 18, 19 at opposite ends respectively, bearing 18 may be dispensed with and bearing 19 replaced by a more substantial thrust bearing.

## Claims

1. A barrier for agricultural use comprises a flexible element (2), means for storing the flexible element, from which the element may be withdrawn and into which the element may be retracted, the element extending over the major part of the length of the means for storing and means (3) associated with the means for storing for automatically retracting the flexible element into the means for storing on release from a withdrawn position, wherein the means for storing comprises an elongate tube (1) within which the flexible element may be stored, the tube further comprising a gap (5) extending over the major part of its length through which the flexible element may be withdrawn or retracted and the means for storing is adapted to be removably pivotally mounted via a hinged joint (26, 27) to a post to enable the flexible element to be pivoted through an angle.

2. A barrier as claimed in claim 1, in which means (12, 13) are provided for pretensioning the means for automatically retracting.

3. A barrier as claimed in claim 1, or 2, in which the means for automatically retracting comprise a helical spring (15) the torsional force in which is increased as the flexible element is withdrawn, the torsional force being employed on release of the element to retract it back onto the means for storing.

4. A barrier as claimed in any preceding claim, in which the means for storing comprises a former (14) coaxially surrounding the means for automatically retracting upon which the flexible element is wound for storage.

5. A barrier as claimed in any preceding claim in which the flexible element comprises a series of aligned members.

6. A barrier as claimed in any preceding claim, in which the flexible element comprises a net.

7. A barrier as claimed in any preceding claim, in which the flexible element comprises reflective material.

8. A barrier as claimed in any preceding claim, in which the reflective element comprises or consists of electrically conductive material.

9. A barrier as claimed in any preceding claim, in which means are provided for electrifying the flexible element.

## Patentansprüche

1. Barriere für landwirtschaftliche Verwendung, mit einem flexiblen Element (2), einem Mittel zum Speichern des flexiblen Elementes, aus dem das Element herausgezogen und in das das Element eingezogen werden kann, wobei sich das Element über den Großteil der Länge des Mittels zum Speichern erstreckt, und mit einem Mittel (3), das dem Mittel zum Speichern zugehörig ist, um das flexible Element selbsttätig in das Mittel zum Speichern einzuziehen, wenn es aus einer herausgezogenen Stellung freigegeben wird, wobei das Mittel zum Speichern ein langgestrecktes Rohr (1) aufweist, in dem das flexible Element gespeichert werden kann, das Rohr außerdem einen sich über den Großteil seiner Länge erstreckenden Spalt (5) aufweist, durch den das flexible Element herausgezogen oder eingezogen werden kann, und das Mittel zum Speichern dazu eingerichtet ist, um abnehmbar, schwenkbar über eine Gelenkverbindung (26, 27) an einem Pfosten angebracht zu werden, um zu ermöglichen, daß das flexible Element um einen Winkel geschwenkt werden kann.

2. Barriere wie in Anspruch 1 beansprucht, bei der Mittel (12, 13) vorgesehen sind, um das Mittel zum selbsttätigen Einziehen vorzuspannen.

3. Barriere wie in Anspruch 1 oder 2 beansprucht, bei der das Mittel zum selbsttägigen Einziehen eine Schraubenfeder (15) aufweist, deren Torsionskraft vergrößert wird, wenn das flexible Element herausgezogen wird, wobei die Torsionskraft bei Freigeben des Elementes benutzt wird, um es in das Mittel zum Speichern zurück einzuziehen.

4. Barriere wie in irgendeinem vorausgehenden Anspruch beansprucht, bei der das Mittel zum Speichern einen Formkörper (14) aufweist, der das Mittel zum selbsttätigen Einziehen koaxial umgibt und auf dem das flexible Element zur Speicherung aufgewickelt wird.

5. Barriere wie in irgendeinem vorausgehenden Anspruch beansprucht, bei der das flexible Element eine Reihe fluchtender Glieder aufweist.

6. Barriere wie in irgendeinem vorausgehenden Anspruch beansprucht, bei der das flexible Element ein Netz aufweist.

7. Barriere wie in irgendeinem vorausgehenden Anspruch beansprucht, bei der das flexible Element reflektierendes Material aufweist.

8. Barriere wie in irgendeinem vorausgehenden Anspruch beansprucht, bei der das flexible Element elektrisch leitendes Material aufweist oder daraus besteht.

9. Barriere wie in irgendeinem vorausgehenden Anspruch beansprucht, bei der Mittel vorgesehen sind, um das flexible Element zu elektrifizieren.

## Revendications

1. Barrière pour utilisation agricole comprenant un élément flexible (2), des moyens pour stocker l'élément flexible, à partir desquels l'élément peut être extrait et dans lesquels l'élément peut être rétracté, l'élément s'étendant sur la majeure partie de la longueur des moyens de stockage, et des moyens (3) associés aux moyens de stockage, pour rétracter automatiquement l'élément flexible dans les moyens de stockage à la libération depuis une position extraite, dans laquelle les moyens de stockage comprennent un tube allongé (1) dans lequel l'élément flexible peut être stocké, le tube comprenant en outre un intervalle (5) s'étendant sur la majeure partie de sa longueur, à travers lequel l'élément flexible peut être extrait ou rétracté et les moyens de stockage sont adaptés de façon à être montés à pivotement de façon amovible, par l'intermédiaire d'une jonction articulée (26, 27) sur un montant, pour permettre à l'élément flexible de pivoter suivant un angle donné.

2. Barrière selon la revendication 1, dans laquelle des moyens (12, 13) sont prévus pour tendre au préalable les moyens de rétraction automatique.

3. Barrière selon la revendication 1 ou 2, dans laquelle les moyens de rétraction automatique comprennent un ressort hélicoïdal (15), dont la force de torsion est augmentée lorsque l'élément flexible est extrait, la force de torsion étant utilisé à la libération de l'élément pour le rétracter de façon à revenir sur les moyens de stockage.

4. Barrière selon l'une quelconque des revendications précédentes, dans laquelle les moyens de stockage comprennent un dispositif de formage (14) entourant coaxialement les moyens de rétraction automatique, sur lequel l'élément flexible est enroulé pour le stockage.

5. Barrière selon l'une quelconque des revendications précédentes, dans laquelle l'élément flexible comprend une série d'organes alignés.

6. Barrière selon l'une quelconque des revendications précédentes, dans laquelle l'élément flexible comprend un filet.

7. Barrière selon l'une quelconque des revendications précédentes, dans laquelle l'élément flexible comprend un matériau réfléchissant.

8. Barrière selon l'une quelconque des revendications précédentes, dans laquelle l'élément réfléchissant comprend ou consiste en un matériau conducteur de l'électricité.

9. Barrière selon l'une quelconque des revendications précédentes, dans laquelle des moyens sont prévus pour électrifier l'élément flexible.
